# EUROPEAN PATENT APPLICATION

(11) **EP 2 744 073 A1**
(43) Date of publication of application: **18.06.2014**
(21) Application number: 13193414.3
(22) Date of filing: 19.11.2013
(51) Int. Cl.: H02K 1/18, H02K 5/04

(54) **Electric machine stator securing method**

(30) Priority: 14.12.2012 US 201213715609
(71) Applicant: Deere & Company, Moline, IL 61265-8098 (US)
(72) Inventor: Eike, Craig R, Coffeyville, KS Kansas 67337 (US); Love, Galen R, Cherryvale, KS Kansas 67335 (US); Burjes, Roger W, Cedar Falls, IA Iowa 50613 (US); McKinzie, Kyle K, Altamont, KS Kansas 67330 (US)
(74) Representative: Holst, Sönke

(57) **Abstract**

A vehicle including a movable element and an electric machine either driving or being driven by the movable element. The electric machine having first and second housing portions and a stator. The second housing portion is engaged with the first housing portion. The stator being coupled to the first housing portion and the second housing portion by way of compressive force applied to the stator by and between the first housing portion and the second housing portion.

## Description

### Field of the Invention

The present invention relates to electric machines, and, more particularly, to a method and apparatus for securing the stator of an electric motor or generator to a housing.

### Background of the Invention

An electric motor is an electromagnetic/mechanical device that converts electrical energy into mechanical energy. Conversely an electric generator is an electromagnetic/mechanical device that converts mechanical energy into electrical energy. Electrical machines such as electric motors and generators operate through the interaction of ferrous materials and magnetic fields and current carrying conductors to thereby generate the mechanical force or electricity respectively. Electric motors are found in applications as diverse as pumps, blowers, fans, machine tools, household appliances, power tools, disc drives in computers and the like. Electrical motors come in various sizes from small motors that are utilized in watches to rather large electric motor/generators utilized in locomotive engines.

A rotor of an electric motor is typically the rotating part of the motor and it rotates due to the magnetic fields that are arranged in the motor so that a torque is developed about the axis of the rotor. A stator is the stationary part within which the rotor rotates. The electromagnetic interaction between the stator and rotor cause the rotor to rotate and convey the motion and torque to some element connected to the shaft that typically runs through the rotor. The electromagnetic interaction causes a torque in the rotor and a generally opposite torque in the stator. Stators are typically made with a stack of oriented laminations that have electrical windings passing therethrough and the stator is most commonly secured to the housing by a hot drop process. The hot drop process involves heating the housing to an elevated temperature, thereby causing the housing to expand and the stator is then dropped into the heated housing with the dimensions of the housing and stator being such that as the housing cools an interference fit results, with there being a radial compressive force exerted upon the stator by the contracted housing. The hot drop process requires a large amount of energy to heat the housings.

Another way in which a stator is secured to the housing is by way of bolts that extend through the housing and the laminations of the stator to thereby immobilize the stator relative to the housing. This has the problem of reducing the effectiveness of the laminations, since holes to accommodate the bolts are needed, which extend through the laminations.

What is needed in the art is an efficient, energy-saving method and apparatus for connecting the stator to the housing of an electric machine.

### Summary

The present invention provides a method and apparatus for connecting the stator to the housing of an electric machine.

The invention in one form is directed to a vehicle including a movable element and an electric machine either driving or being driven by the movable element. The electric machine having first and second housing portions and a stator. The second housing portion is engaged with the first housing portion. The stator being coupled to the first housing portion and the second housing portion by way of compressive force applied to the stator by and between the first housing portion and the second housing portion, or by fasteners which retain the first housing portion to the second housing portion.

The invention in another form is directed to an electric machine having first and second housing portions and a stator. The second housing portion is engaged with the first housing portion. The stator being coupled to the first housing portion and the second housing portion by way of compressive force applied to the stator by and between the first housing portion and the second housing portion.

The invention in yet another form is directed to a method of securing a stator in an electric machine, the method including the steps of positioning the stator, positioning a second housing portion and applying compressive force. The positioning the stator step includes positioning the stator in a first housing portion such that a portion of a lamination on one end of the stator directly encounters a part of the first housing portion in an axial direction. The positioning a second housing portion step includes the positioning of the second housing portion against another lamination on an opposite end of the stator. The applying compressive force step includes applying an axial compressive force against the lamination and the other lamination to thereby preclude movement of the stator relative to the housing portions.

### Brief Description of the Drawings

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 illustrates a vehicle that utilizes an embodiment of an electric machine that is constructed using the structure and method of the present invention;
Fig. 2 is a cross-sectional schematical view of an embodiment of the electric machine utilized in the vehicle of Fig. 1;
Fig. 3 is a cross-sectional schematical view of another embodiment of the electric machine utilized in the vehicle of Fig. 1; and
Fig. 4 is an end view of the electric machine of either Figs. 2 or 3.

Corresponding reference characters indicate corresponding parts throughout the several views. The exemplifications set out herein illustrate embodiments of the invention, and such exemplifications are not to be construed as limiting the scope of the invention in any manner.

### Detailed Description

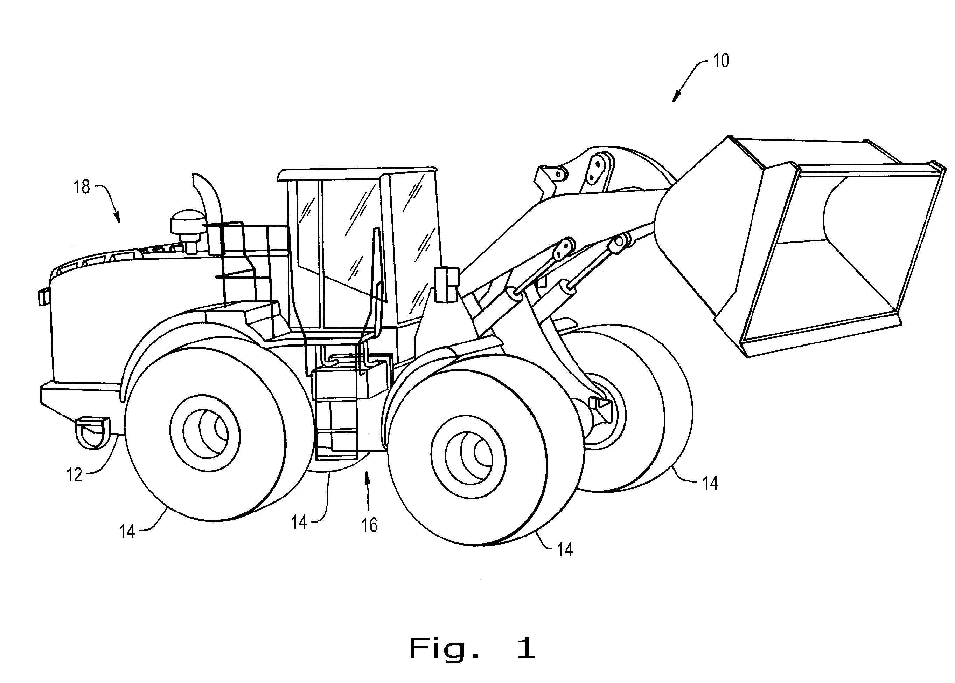

Referring now to the drawings, and more particularly to Fig. 1, there is illustrated a vehicle 10, which may be in the form of an agricultural machine, a construction machine, a forestry machine or other vehicle. Vehicle 10 includes a chassis 12 with moveable elements 14 in the form of wheels that are either directly or indirectly driven by at least one electric machine 16 that either supplies electrical power or is supplied electrical power by way of a power source such as an engine 18. Electrical machine 16 may be either an electric motor, or an electric generator. Actually vehicle 10 may have at least one of both a motor and generator that are constructed by the method using the structural attributes of the present invention. Electrical power from the electric power source is applied, under the control of the machine operator, to electric machine 16 to drive driven devices 14.

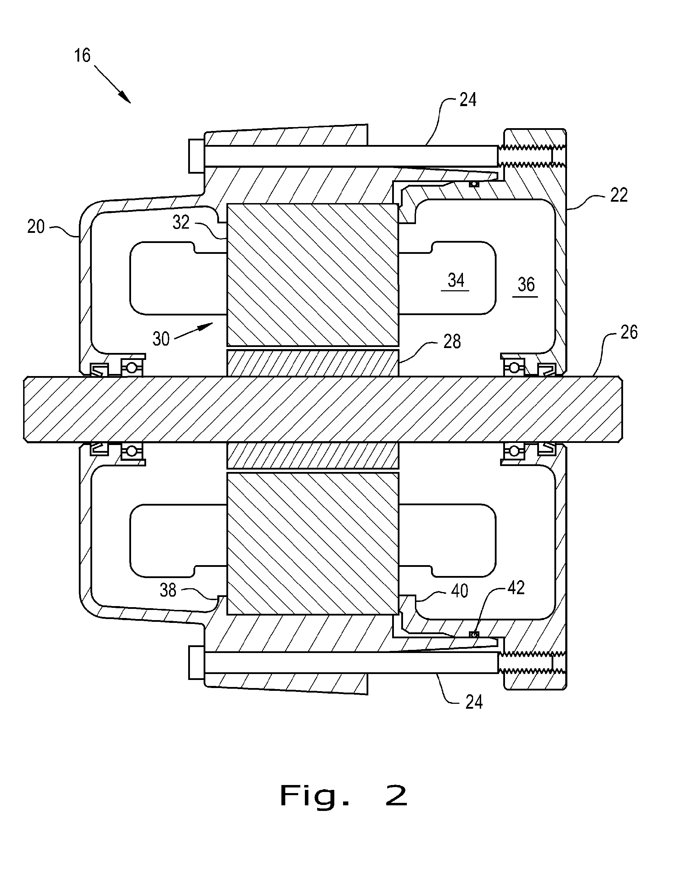

Now, additionally referring to Fig. 2 there is illustrated electric machine 16 having housing portions 20 and 22 that are engaged with each other in a sliding fashion, held together with fasteners 24 in the form of bolts that pass through part of housing portion 20 and are threaded into a part of housing portion 22. A shaft 26 extends through at least one of housing portions 20 and 22, having a rotor 28 attached thereto. A stator 30 is connected to housing portions 20 and 22. Stator 30 includes laminations 32 and windings 34, which extend through laminations 32. Laminations 32 are generally pieces of ferrous metal that are stacked together and electric conductors in the form of windings 34 are wound so as to have a desired geometry for the induction of magnetic fields into laminations 32 or for the passing of the magnetic fields through the loops of windings 34. The portion of windings 34 illustrated to the sides of stator 30 may be referred to as end windings or as end turns that extend beyond laminations 32 into cavity 36, but for the sake of explanation of the present invention, windings 34 are shown schematically, the details of which vary depending on motor or generator specifics. This being a schematical representation, the proportional sizes of rotor 28 and stator 30 may not reflect actual proportions of each of these elements.

Housing portion 20 has an annular protrusion 38 that extends radially inward and provides a shoulder against which a radially outward portion of laminations 32 come into contact. In a similar manner, housing portion 22 has a protrusion 40 that extends radially inward to contact a lamination on the opposite side of stator 30, relative to the lamination which protrusion 38 contacts. Fasteners 24 are torqued so that the tensile force that exists in fasteners 24 results in a compressive force applied to laminations 32 by way of protrusions 38 and 40 to thereby hold stator 30 from moving relative to housing portions 20 and 22. Stator 30 is engaged and torsionally coupled or connected to housing portions 20 and 22 by the compressive force applied thereby.

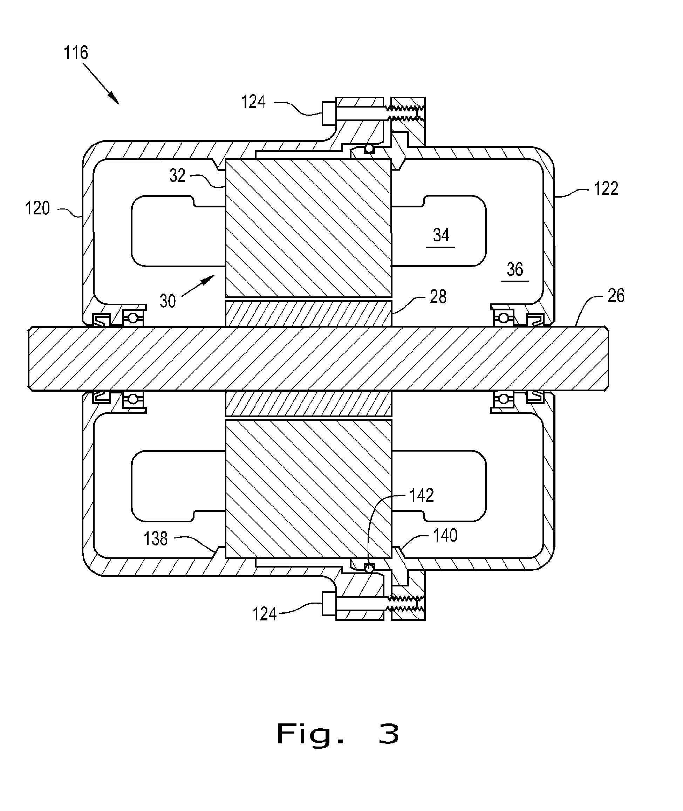

The section of housing 20 that is radially outward from laminations 32 does not provide an interference fit with stator 30 and any interaction therebetween is insufficient to secure stator 30 to housing portion 20. This section may actually have a slight taper to allow for the ease in assembly and to guide stator 30 so that it is well centered in housing 20 as stator 30 encounters protrusion 38. As shown in Fig. 3 this section may be spaced apart from stator 30, which may serve as a cooling channel.

Now, additionally referring to Fig. 3, there is illustrated an electric machine 116, which is similar in construct to that illustrated in Fig. 2, with the reference numbers being the same for the same parts and increased by 100 for parts that, although somewhat different, are significantly similar in their utility. Here housing portion 122 extends along the side of a radially outward portion of an end lamination. Again stator 30 is compressively held in position by the axial force applied thereto by housing portions 120 and 122, and fasteners 124.

Fasteners 24 and 124 are illustrated as bolts, yet other fasteners are also contemplated to provide the compressive force applied to stator 30. Housing portions 20 and 22, as well as 120 and 122 are sealed together respectively by O-rings 42 and 142. Cavity 36 may include gearing, such as a transmission or other elements used in electric machines 16 and 116, with shaft 26 not extending directly from rotor 28 through housing 22/122 as illustrated. Further, at least one of the housing portions may be integral with other constructs of vehicle 10, and/or the housing portions may enclose other components, not illustrated. Electrical interconnections and conductors have been purposely omitted from the figures for the sake of clarity, for ease of focusing on an explanation of the present invention.

No fasteners or other elements pass through stator 30 to secure stator 30 to housing portions 20, 22, 120 or 122. Stator 30 is held from axial and rotational movement by the compressive force from the housing portions and the tension force from the fasteners as discussed herein. The axial force in conjunction with the friction between housing portions 20, 22, 120, 122 act together to torsionally restrain stator 30 relative to the respective housing portions.

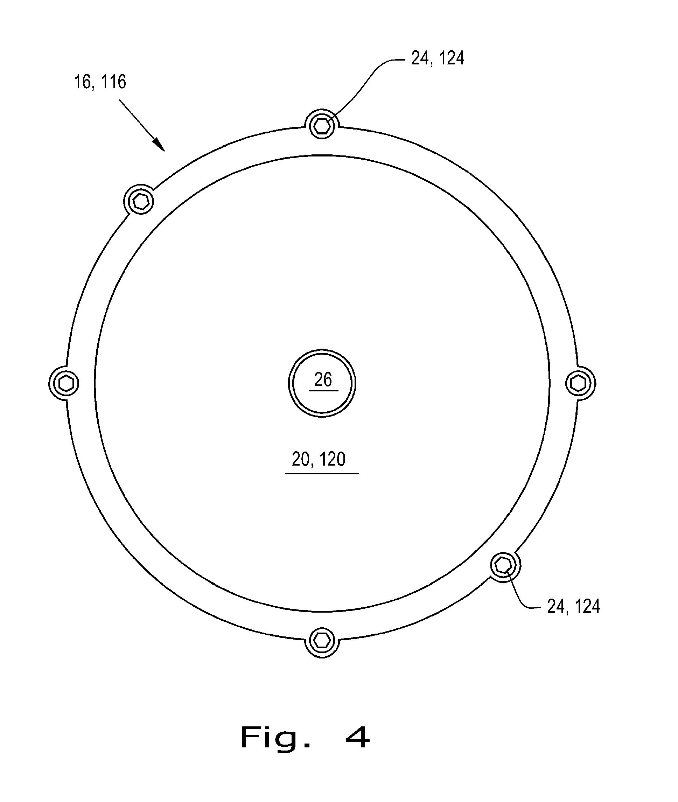

Now, additionally referring to Fig. 4, there is shown an end view of electric machine 16, 116. This view illustrates the distribution of fasteners 24 or 124, which may be symmetrically or asymmetrically arranged about a radially outer portion of housing portion 20, 120, not extending through the body of electrical machine 16 or 116.

The present invention provides for the radial piloting and axial alignment of stator 30 and of torque transmittal for electric machines 16 and 116. Stator 30 is located radially (piloted) as it is axially inserted into housings 20, 120 by a controlled clearance fit between the outer portion or outer diameter of stator 30 and the inner corresponding diameter of housings 20, 120. The axial location of stator 30, and the transmittal of torque thereto is accomplished by the clamping of stator 30 between the shoulders 38 and 40, 138 and 140 of the two adjacent housings. The particular configuration discussed herein allows for the use of a radial seal, such as O-ring 42, 142 between the two adjacent housings thereby providing a cost-effective seal and allowing the assembly to accommodate length variations of the stack of laminations 32 within production tolerances, while preventing leakage and allowing stator 30 to be clamped tightly for torque transmittal.

Advantageously, the present invention allows for ease of assembly and disassembly.

This provides for ease in rebuilding electrical machines 16, 116 as well as providing for easier recycling of the components when refurbishment is not practical or desired. This allows for a financial and environmental advantage over the current state of the art.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A vehicle, comprising:
a movable element;
an electric machine one of driving and being driven by said movable element, the electric machine including:
a first housing portion;
a second housing portion engaged with said first housing portion; and
a stator coupled to said first housing portion and said second housing portion by way of compressive force applied to said stator by and between said first housing portion and said second housing portion.

2. The vehicle of claim 1, wherein said stator includes a plurality of laminations, said compressive force being applied to a section of said laminations.

3. The vehicle of claim 2, wherein said section of said laminations is a radially outward portion of said laminations.

4. The vehicle of claim 3, wherein said compressive force is substantially in an axial direction.

5. The vehicle of claim 4, wherein said first housing portion extends substantially across said stator in said axial direction.

6. The vehicle of claim 1, wherein said stator does not have any element extending through said stator that secures said stator to said housing portions.

7. The vehicle of claim 6, wherein said electric machine is further comprised of at least one fastener coupled between said first housing portion and said second housing portion, said at least one fastener supplying said compressive force to said stator by having a tensile force in said at least one fastener.

8. The vehicle of claim 1, wherein said electric machine further comprising a fluidic seal positioned between said first housing portion and said second housing portion.

9. An electric machine couplable to a vehicle, the electric machine comprising:
a first housing portion;
a second housing portion engaged with said first housing portion; and
a stator coupled to said first housing portion and said second housing portion by way of compressive force applied to said stator by and between said first housing portion and said second housing portion.

10. The electric machine of claim 9, wherein said stator includes a plurality of laminations, said compressive force being applied to a section of said laminations.

11. The electric machine of claim 10, wherein said section of said laminations is a radially outward portion of said laminations.

12. The electric machine of claim 11, wherein said compressive force is substantially in an axial direction.

13. The electric machine of claim 12, wherein said first housing portion extends substantially across said stator in said axial direction.

14. The electric machine of claim 9, wherein said stator does not have any element extending through said stator that secures said stator to said housing portions and/or wherein said electric machine further comprising a fluidic seal positioned between said first housing portion and said second housing portion.

15. The electric machine of claim 14, wherein said electric machine further comprises at least one fastener coupled between said first housing portion and said second housing portion, said at least one fastener supplying said compressive force to said stator.
